# EUROPEAN PATENT SPECIFICATION

(11) **EP 4 058 377 B1**
(45) Date of publication and mention of the grant of the patent: **01.07.2026**
(21) Application number: 20808092.9
(22) Date of filing: 16.11.2020
(51) Int. Cl.: B65D 81/38

(54) **VACUUM-INSULATED CONTAINER BODY AND CONTAINER**
VAKUUMISOLIERTER BEHÄLTERKÖRPER UND BEHÄLTER
CORPS DE CONTENANT ISOTHERME À VIDE ET CONTENANT

(30) Priority: 15.11.2019 GB 201916709; 15.11.2019 GB 201916711
(43) Date of publication of application: 21.09.2022
(73) Proprietor: Oyster Thermal AS, 0354 Oslo (NO)
(72) Inventor: BIRGERSEN, Torgeir, 0260 Oslo (NO); SANDMÆL, Ian Paul, 1366 Lysaker (NO); DANIEL, Paul Alexander, 1263 Oslo (NO)
(74) Representative: Kilburn & Strode LLP
(86) International application number: PCT/EP2020/082275
(87) International publication number: WO 2021/094614

(56) References cited:
- EP-A2- 0 990 406
- GB-A- 525 490
- US-A- 2 060 155
- US-A1- 2007 082 099

## Description

The present invention relates to a vacuum-insulated container body and to a vacuum-insulated container. A fastener for a container is additionally disclosed.

Insulated containers are containers designed to maintain a temperature within the container at a consistent level by preventing transfer of heat into or out of the container.

Box-like insulated containers, often known as coolers or cool boxes, are commonly used within the domestic market. Often, a cooling pack is placed inside the container to keep the temperature low. Such coolers traditionally comprise interior and exterior shells of plastic, with hard insulating foam provided between the shells.

Vacuum-insulated shipping containers are sometimes used within the commercial market for transport of heat-sensitive products, such as fresh produce. These are usually rectangular boxes lined with vacuum-insulated panels along each side of the container. This is achieved either by using individual panels along each wall, or by using one or more flat panels that are folded to conform to the walls.

Vacuum-insulated panels comprise a flexible barrier layer formed from multi-layer metallised foil enclosing a rigid, highly porous core that supports the barrier layer. One technique by which conventional vacuum-insulated panels may be manufactured is by assembling these parts in a low-pressure environment, with the foil barrier layer then being sealed via a heat welding process around all edges of the core to maintain the low internal pressure once the panel is removed from the low-pressure manufacturing environment.

Vacuum-insulated shipping containers offer significantly improved insulation and reduced weight compared to conventional insulated cool boxes. However, the vacuum-insulated panels are very delicate and can be easily perforated, thereby destroying the vacuum. Furthermore, whilst the panels have good insulation properties at their centres, this is much lower along the edges or folds where thermal bridges reduce the insulation.

Cylindrical vacuum-insulated containers, known as vacuum flasks, typically comprise interior and exterior shells of steel or sometimes glass, with a vacuum provided within the shells. Such containers do not include a filler material, with the shells themselves instead providing structural integrity. Smaller vacuum flasks are used domestically for keeping beverages warm or cool, whilst larger vacuum flasks are used for industrial purposes, such as storage of liquefied gases.

Vacuum flasks have very good structural strength, but the use of metal shells results in a thermal bridge at the neck of the flask. Furthermore, as the shells provide the structural integrity, vacuum flasks are available only in cylindrical shapes, restricting the way in which this type of container can be used.

US 2 060 155 A discloses an insulated container. GB 525 490 A discloses a thermally insulated container for foodstuffs. EP 0 990 406 A2 discloses a vacuum-insulated container body and a vacuum-insulated container.

A need exists for an improved vacuum-insulated container.

The present invention provides a vacuum- insulated container body according to claim 1. The flanges of the inner body shell and the outer body shell are preferably both in a common plane.

The above configuration provides significant advantages compared to existing vacuum-insulated containers. The use of metal shells, instead of a film body, significantly increases the structural integrity of the container. Furthermore, solid metal walls are impermeable to gas and vapor and therefore do not suffer from film diffusion, increasing the lifetime of the vacuum. The use of flanges in a common plane have been found to provide the most effective sealing.

The intermediate space is preferably a vacuum space. For example, the intermediate space may be at a pressure below 500 mbar, preferably below 100 mbar, more preferably less than 10 mbar.

Each of the inner body shell and the outer body shell is preferably vapour-impermeable and/or gas-impermeable.

One or both of inner and outer body shells may be made from aluminium or an aluminium alloy. The aluminium or aluminium alloy may contain at least 50 wt.% aluminium, optionally at least 75 wt.% aluminium, and further optionally at least 90 wt.% aluminium, further optionally at least 95%, further optionally at least 99 wt.%, and further optionally at least 99.5 wt.%.

One or both of the inner body shell and the outer body shell may have an average thickness of less than 1.5mm, optionally less than 1.2mm, further optionally less than 1mm and further optionally less than 0.8mm. This is considered relatively thin, at least for aluminium when this is used for at least one of the shells.

One or both of the inner body shell and the outer body shell may have an average thickness of greater than 0.1 mm, optionally greater than 0.2 mm and further optionally greater than 0.4 mm.

One or both of the inner body shell and the outer body shell may have an average thickness of about 0.6 mm
The outer body shell may be greater in thickness than the inner body shell. This may save material and weight while still providing a still surprisingly effective and robust container.

One or both of the inner body shell and the outer body shell may comprise a single, homogeneous layer of material. For example, one or both of the inner body shell and the outer body shell may have been formed by a deep drawing process. One or both of the inner body shell and the outer body shell may be self-supporting structures, i.e. able to maintain their shape under their own weight, preferably when separate from the rest of the container components.

One or both of the inner body shell and the outer body shell may comprise a base and a wall. The wall may be connected to the flange by a rounded edge. The wall may encircle or surround the base and the base may be connected to the wall by a rounded edge. The base may be substantially planar and may be substantially rectangular, preferably having a rounded rectangular shape. The wall may have a rounded rectangular cross-section, preferably in a plane parallel to the base. The base may be substantially parallel to the plane of the flanges. The wall may extend in a direction substantially perpendicular to the base.

The core may comprise a porous and/or gas-permeable material. For example, the core may be formed from one of polystyrene foam, polyurethane foam, and silica, such as precipitated silica and fumed silica. Fumed silica is most preferred. The core may comprise a porosity (or void fraction) of greater than 50%, and optionally greater than 75%, and further optionally greater than 85%.

The inner body shell and the outer body shell may be in a spaced-apart relationship. For example, the inner body shell and the outer body shell may be spaced apart by at least 5mm, and further optionally by at least 10mm. The inner body shell and the outer body shell may be spaced apart by less than 50mm, optionally by less than 40mm, further optionally by less than 30mm.

The seal may be substantially vapour-impermeable and/or gas-impermeable. According to the invention, the seal comprises a metallised foil. The seal may optionally comprise a multi-layer metallised foil. The metallised foil may comprise one or more layers of metal-coated polymer film. The metal may comprise aluminium.

The seal may be formed substantially in a single plane, and the seal may have been cut from a single sheet of material.

The vacuum-insulated container body may comprise a gasket. The gasket may be mounted to the flanges, optionally with the seal between the gasket and the flange. The gasket may be configured to protect the seal, preferably from puncture.

The gasket may be formed from a non-metal material. The gasket may be formed from a compressible material, optionally from an elastomeric material. The gasket may be formed from a gas-impermeable material. The material is preferably, compressible, elastomeric and gas-impermeable.

The gasket may be configured to deform to a surface so as to provide a gas-impermeable seal. However, gas-impermeability is not essential when the vacuum-insulated container does not need to be sealed in a gas-tight manner.

In a preferred embodiment, the present invention provides a vacuum-insulated container according to claim 12.

The container lid may be configured to engage the vacuum-insulated container body to define an internal air volume. The container lid and container body may be configured to engage so as to isolate the internal air volume from an external environment.

The container lid may be a vacuum-insulated container lid.

The container lid may comprise an inner lid shell and an outer lid shell, and a core provided between the inner lid shell and the outer lid shell. The container lid may comprise a seal connecting the inner lid shell and the lid body shell, and the inner lid shell, the outer lid shell and the seal may define an intermediate space surrounding the core, where the sealed volume may be at a pressure below atmospheric pressure. Each of the inner lid shell and the outer lid shell may comprise a flange bonded to the seal, and the flanges of the inner lid shell and the outer lid shell may both being in a common plane. The inner lid shell and the outer lid shell may each be made of a metal material.

The flanges of the lid may be configured to engage the flanges of the vacuum-insulated container body.

The container lid may share a similar construction with the vacuum-insulated container body and may comprise any one or more or all of the features discussed above with respect to the vacuum-insulated container.

One or both of the body and the lid may comprise a reinforcement frame configured to reinforce the flange of the respective outer shell. The flange may be made from a metal and may comprise aluminium or an aluminium alloy, which may be aluminium or an aluminium alloy as described above.

The reinforcement frame of one of the body or the lid, preferably of the lid, may comprise a shield portion, which may be configured to cover an interface between the lid and the body when the lid is in the closed position with respect to the body.

The seal may be formed as a layer less than about 0.3mm thick, optionally less than 0.25mm thick, about 0.1 to 0.2 mm thick being an example range in which this thickness lies.

The seal may be formed as a multi-layer construction which includes multiple individual vapour/gas barrier layers, for example of metal such as aluminium, each individual barrier layer optionally being about 100 nanometres or within the range of about 70 to 90 nanometres thick.

A distinction can be made between the vapour/gas barrier layer(s), e.g. aluminium layer(s), within the seal layer construction and any additional layers/thickness designed for, for example, puncture protection.

Such vapour/gas barrier layers may be laminated with polymer layers therebetween.

It is a benefit when each barrier layer is relatively thin otherwise diffusion can adversely occur transversally between the sub layers of the film. Some examples employ a multi-layer film or foil consisting of multiple layers of very thin aluminium (each aluminium layer is only about 100 nanometres thick or slightly less).

Each of these aluminium layers individually may not represent a 100% barrier layer but advantageously and surprisingly the sum of them laminated with polymer layers in between gives a superior barrier protection with minimal thermal transfer across the construction.

The seal may be formed as a layer less than about 50% of the thickness of at least one of the inner and outer body shells, for example less than about 33% of such thickness, about 10% to 50%, 15% to 33% or 15% to 25% or 10% to 17% being examples of where this ratio lies.

Certain preferred embodiments of the present invention will now be described in greater detail, by way of example only and with reference to the accompanying drawings, in which:
Figures 1a and 1b show a first embodiment of a vacuum-insulated container comprising a body and a lid in a closed position and an open configuration, respectively;
Figure 2 shows a side view of the vacuum-insulated container of the first embodiment in the closed configuration highlighting an interface surface between the lid and the body;
Figure 3 is a cross-section through the vacuum-insulated container of the first embodiment in the closed position.
Figures 4 and 5 are partial cross-sections showing a seal of the body of the vacuum-insulated container of the first embodiment, with a gasket not shown and shown, respectively;
Figures 6 and 7 are detailed views of an interface between the lid and the body of the vacuum-insulated container of the first embodiment;
Figure 7b shows a modification to the first embodiment with modified structural frame parts or shields;
Figure 7c shows a modification to the first embodiment to provide a modified internal shell of a lid thereof;
Figure 8 shows a second embodiment of a vacuum-insulated container comprising a body and a lid in a closed position;
Figure 9 is a cross-section through the vacuum-insulated container of the second embodiment in the closed configuration;
Figure 10a and 10b are partial cross-sections showing a fastener of the vacuum-insulated container of the second embodiment in latched and unlatched configurations, respectively;
Figure 10c is a partial cross-section showing hinge operation of a fastener of the vacuum-insulated container of the second embodiment;
Figure 10d is a partial cross-section showing over-extension hinge operation of a fastener of the vacuum-insulated container of the second embodiment;
Figure 10e is a perspective view showing latching operation of a fastener of the vacuum-insulated container of the second embodiment; and
Figure 10f is a perspective view showing hinge operation of a fastener of the vacuum-insulated container of the second embodiment.

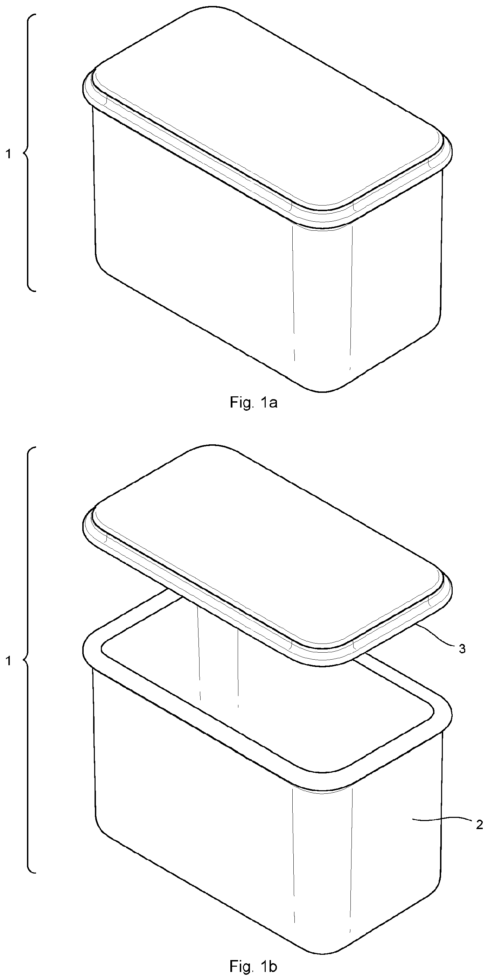

Figures 1 to 7 illustrate a first embodiment of an insulated container 1.

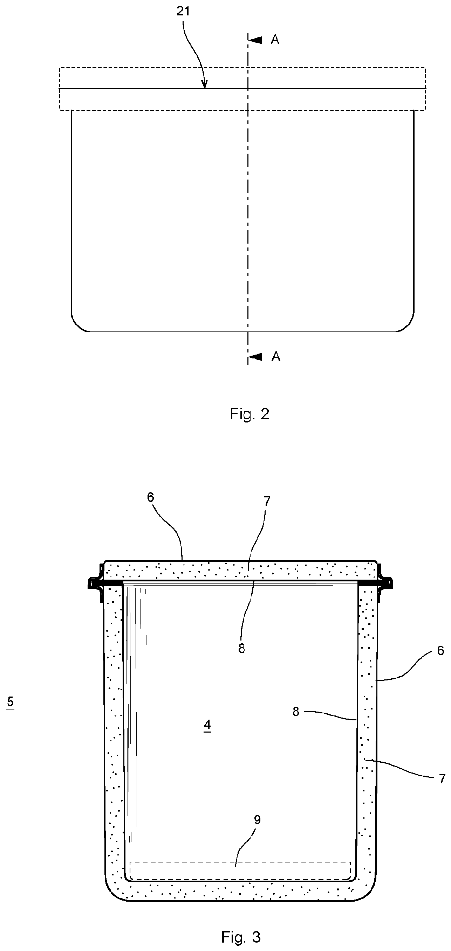

Figures 1a and 1b show a body 2 and a lid 3 of the insulated container 1. The body 2 and the lid 3 fit together along an interfacing surface 21, shown in Figure 2, by means of mechanical fastenings (not shown).

The primary function of the insulated container 1 is to maintain the temperature of an internal air volume 4 of the insulated container 1, together with any contents, for a period of time, independent of the temperature of the external ambient environment 5.

With reference to Figure 3, the body 2 and lid 3 are both constructed with a multi-layered wall construction comprising an external shell 6, a core 7 and an internal shell 8.

The internal and external shells 6, 8 are made of thin, thermally-conductive aluminium. The internal and external shells 6, 8 have a thickness of approximately 0.6 mm, and contribute to the structural integrity of the container 1. The internal and external shells 6, 8 are manufactured by a deep drawing process, in which a sheet metal blank is radially drawn into a die by the mechanical action of a press.

The core 7 is constructed with a porous material that provides mechanical structure when the chamber construction is evacuated down to low pressure. In a preferred embodiment, fumed silica is used for the core 7.

The low pressure impedes heat transfer by means of conduction and convention. As well as providing stability to the shells 6, 8, the core 7 also restricts movement of the remaining gas molecules, further impeding heat transfer by convection.

An optional phase change material (PCM) module 9 may be added to the base of the internal air volume 4, which functions as a thermal energy bank. Direct contact between the PCM module 9 and the aluminium internal structural shell 8 provides fast transfer of thermal energy between the internal air volume 4 of the containers and the PCM module 9 by means of conduction along the aluminium internal shell 8 and subsequent convection into the internal air volume 4. This efficient energy transfer results in a more even temperature distribution within the internal air volume 4.

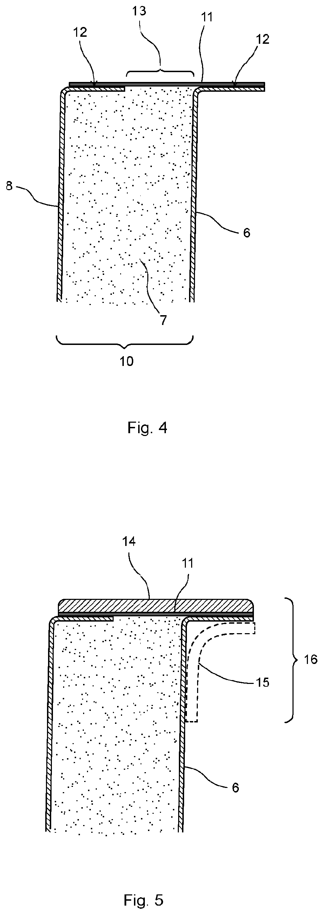

Referring now to Figure 4, to create optimal insulation performance of an intermediate vacuum space 10 between the external structural shell 6 and the internal structural shell 8, the gasses within the porous structure of the insulation core 7 must be evacuated.

The internal and external shells 6, 8 and the core 7 are assembled at atmospheric pressure and a chamber seal 11 is bonded to the shells 6, 8 to form the intermediate vacuum space 10. The chamber seal 10 is bonded to the flanges using a pressure sensitive adhesive that is pre-applied to the seal 10.

The intermediate vacuum space 10 is then evacuated to a target pressure through a small hole left in the chamber seal 11, which is then sealed after reaching the target pressure. Alternatively, however, the intermediate vacuum chamber 10 may be evacuated by applying the target pressure to the entire 'ring' opening between the two flanges 12 prior to applying the chamber seal 11.

Typically, the intermediate vacuum space 10 is evacuated to approximately 1 mbar, as further pressure reduction below this point provides little additional insulating benefit due to thermal insulating bridging elsewhere in the insulated container 1.

The intermediate vacuum space 10 maintains the vacuum by means of the chamber seal 11 applied to horizontal flange surfaces 12 of the inner and outer structural shells 6, 8. The chamber seal 10 in this embodiment comprises a multi-layer metallised film, which is composed of laminated layers of metal-coated polymer films, with the coating metal usually comprising aluminium. The chamber seal 11 minimises vapour and gas diffusion into the intermediate vacuum space 10 over the lifespan of the insulated container 1.

At the location of the horizontal flanges 12, the space between the outer and inner structural shells 6, 8, known as the thermal insulating bridge, directly affects the thermal insulating performance of the vacuum chamber 10. A wider bridge reduces heat transfer between the internal air volume 4 and the external ambient environment 5.

The surface area of the chamber seal 11 constitutes under 1% of the total surface area of the intermediate vacuum space 10, meaning that internal pressure change due to gas diffusion across the chamber seal 11 is greatly reduced compared to existing vacuum-insulated panels that are completely enclosed by multi-layer metallised foil.

Referring now to Figure 5, due to the fragility of multi-layer metallised foil, the entire surface of the chamber seal 11 is covered with a compressible gasket 14, which protects the multi-layer metalized foil of the chamber seal 11. The chamber seal 11 is substantially planar. The compressible gasket 14 is substantially planar. The seal 11 and compressible gasket 14 of each shell engage one another substantially continuously all of the way between the flanges 12 of each shell at a substantially planar interface therebetween.

The chamber seal 11 is flexible. In this example the chamber seal11 has a thickness of about 100 microns, although different thicknesses are contemplated. Within the multi-layer metallised foil, metal layers present are of aluminium although other materials are contemplated. The chamber seal 11 may include multiple individual layers of vapour/gas barrier, such as of aluminium, plus layers of other material such as polymer which may be incorporated e.g. for puncture protection, in one example the individual vapour/gas barrier layers each being less than 100 nanometres thick. The polymer layers may be laminated between barrier layers and vice versa.

In this example with at least one of the shells 6, 8 being an average of about 0.6 mm thick, the flexible chamber seal 11 is less than 20%, for example about 15 to 20%, of the thickness of at least one of the shells 6, 8.

Furthermore, the exposed flange edges of the external shell 6 may optionally be covered by a structural frame 15, fixed to the external shell 6 by means of an adhesive. This protects the structural integrity of the flange 12 and the chamber seal 11.

The chamber seal 11, the flanges 12, the gasket 14 and the structural frame 15 are collectively referred to as the vacuum seal 16. The general construction principles and geometry of the vacuum seal 16 may remain consistent over multiple embodiments of the design, though minor changes in geometry can be implemented depending on the container shape and other requirements.

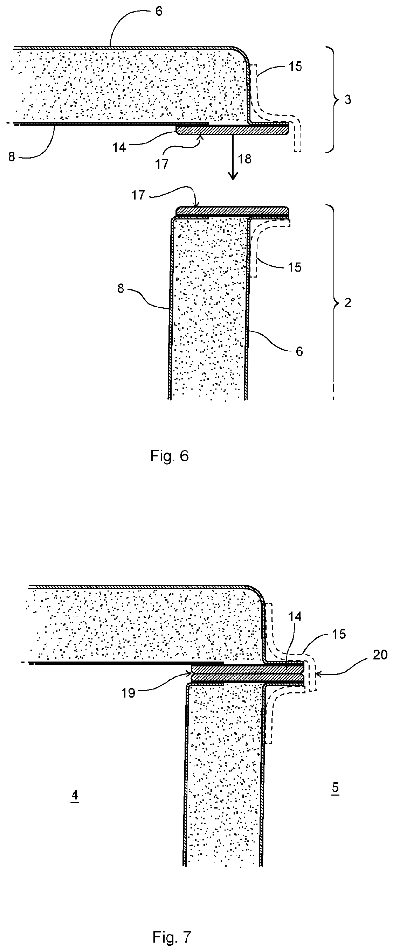

Referring now to Figure 6, it can be seen that the overall shape of the inner and outer shells 6, 8 of the lid 3 and the body 2 are adjusted based on functional requirements of the lid 3 and the body 2, respectively. Furthermore, the lid 3 employs a vacuum seal 16 having a similar construction to the vacuum seal 16 of the body 2, except that the optional structural frame 15 has a slightly different shape, as will be discussed below.

In order to create a sealed internal air space 4, the lid 3 and body 2 are brought together so that the vacuum seals 16 of both the lid 3 and the body 2 are aligned with one another. Sealing surfaces 17 of the compressible gaskets 14 meet when a mechanical downward force 18 is applied to the lid 3 pressing it onto the body 2.

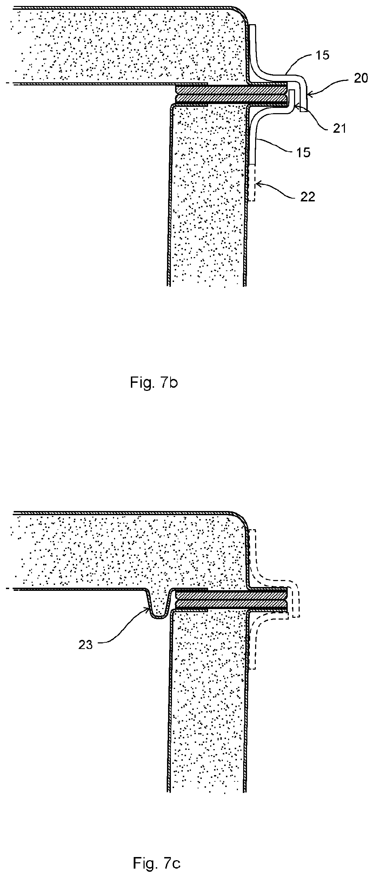

Figure 7 shows the lid 3 and the body 2 assembled together. The flexible natures of the gaskets 14 allow absorption of minor unevenness in the flange geometry, allowing the container to maintain an airtight seal 19.

The structural frame 15 of the lid 3 is optionally provided with a lip edge 20 located around the outer perimeter of the structural frame 15. The lip edge 20 extends vertically downwards past the flange 12 of the body 2, when the lid 3 and body 2 are assembled together. The lip edge 20 allows for alignment of the vacuum seals 16 of the lid 3 and body 2. The lip edge 2 further covers the airtight seal 18 from external physical access.

In a modification shown in Figure 7b, the structural frame 15 of the lid 3 and the structural frame 15 of the body 2 may each overlap (a) fully with its respective gasket 14 in a direction normal (e.g. vertical) to a direction in which its respective gasket 14 extends (e.g. horizontal). Thus, good physical shielding protection for each gasket is assured.

Furthermore, the structural frames 15 of the lid 3 and body 2 may internest or overlap with one another in the up/down direction when the lid 3 is positioned above the body 2. In this case, lip edge 21 of the structural frame 15 of the body 2 may be nested within the lip edge of 20 of the structural frame 15 of the lid 3. This may assist, for example, in keeping falling rain, snow or other potential unwanted materials away from the gaskets 14 while also providing good physical protection for the gaskets 14 and chamber seals 10, also assisting advantageously in positioning the lid 3 on the body 2.

Figure 7b also shows an optional downward extent portion 22 of the structural frame 15 of the body which may be optionally incorporated to provide additional support on the body 2 in the region of the gasket 14 and chamber seal 11. Thus, the structural frame 15 of the body 2 may have a greater vertical extent than that of the lid 3 in a configuration with the lid 3 placed above the body 2.

The optional structural frames 15 when present may run fully round or substantially fully round outer peripheries of the lid 3 and body 2.

Figure 7c shows a modification of the first embodiment in which a locator means or member 23 is incorporated into the lid 3. The locator member 23 when present may be formed as a rib 23. The rib 23 may run fully or substantially fully around the lid 3 near a peripheral outer edge of the inner shell 8 thereof, and may extend from the inner shell 8 of the lid 3, being positioned so as to overlap with the inner shell 8 of the body 2, sitting close to or engaging with the same in order to assist in well positioning the lid 3 on the body 2. When the gaskets 14 of the lid 3 and body 2 have substantially the same cross section as one another at sealing interface surfaces thereof, this may therefore assist in placing the lid 3 on the body 2 in a desired engagement configuration thereof with a full engagement between the gaskets 14.

The structural frames 15 of Figures 7, 7b and 7c may instead be called shields or shield members. They serve well to perform a shielding function for the gaskets 14 and chamber seals 11.

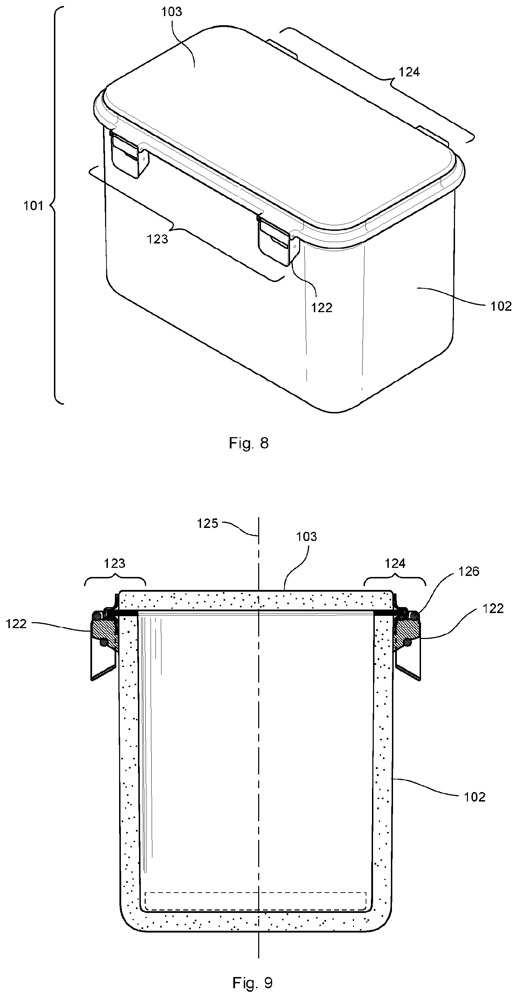

Figures 8 to 10 illustrate a second embodiment of an insulated container 101.

The structure of the insulated container 101 of the second embodiment is similar to that of the insulated container 1 of the first embodiment and, in particular, may include similar flexible seals and gaskets and inner and outer shell parts with flanges in a common plane (for each of the body and lid). Accordingly, features that have already been described will not be described again, and only those features that differ from the first embodiment will be described. Features present in both embodiments are indicated in the second embodiment using the same reference number as the first embodiment, but incremented by 100.

Figure 8 shows the insulated container 101 comprising a body 102 and a lid 103, where the lid 103 is fastened to the body 102 by means of an even number of fasteners 122. Fasteners 122 are placed on opposing sides of the insulated container 101 in equal numbers. In usage, the opposing sides of the container 101 represent a latch side 123 and a hinge side 124 and these sides are interchangeable. For the purpose of these drawings, the latch side 123 is shown on the left and the hinge side 124 is shown on the right.

Referring to Figure 9, each fastener 122 is permanently mounted to the lid 103 and the fasteners 122 are identical for both the latch side 123 and the hinge side 124. The design of the insulated container 101 is laterally symmetrical about a centre line 125.

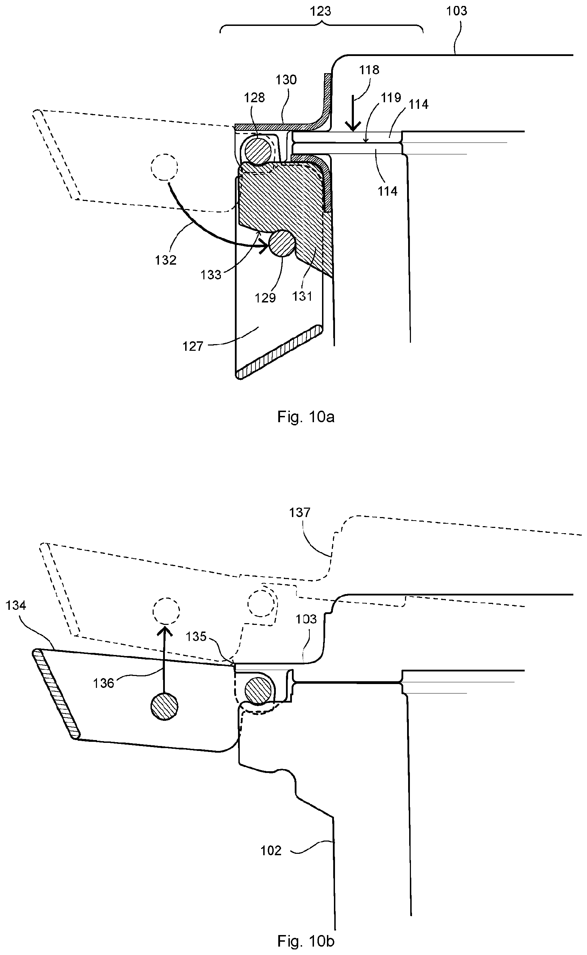

Figure 10a shows how the fastener 122 functions when on the latch side 123. The fastener 122 comprises two pins mounted to a fastener body 127. The fastener 122 interfaces with a mount block 131 by means of two pins 128, 129 each providing a specific function. A hinge pin 128 provides an axis of rotation for the fastener 122 to rotate with respect to the lid 103. A lock pin 129 mechanically locks the position of the fastener 122 in relation to the mount block 131. The mount block 131 is constructed in a semi-flexible material allowing plastic deformation under high load without resulting in permanent deformation of the mount block 131.

The process of latching the fastener 122 involves applying a manual rotation force 132 to the fastener 122 in towards the mount block 131 by a user. When the lock pin 129 reaches the mount block 131, it engages a compression ramp surface 133 of the mount block 131 causing the fastener 122, and consequently the lid 103, to be pulled downwards applying a downwards compression force 118 from the manual rotation force 132 applied by the user. This downwards force 118 acts on the opposing gaskets 114 of the lid 103 and body 102. The compression force 118 results in a tight seal along the gasket interface surface 119.

Figure 10b shows the fastener 122 in a fully opened position 134 when it has reached a predefined maximum angle of rotation in relation to the lid 103. In the present embodiment the maximum angle is slightly beyond 90 degrees (approximately 95 degrees) from the locked position. This maximum angle is controlled by a hard stop mechanical interface 135 between the fastener 122 and a stop 130 provided on the lid 103. In the present embodiment, the stop 130 is formed as part of the structural frame 115 of the lid 103. Additional upwards or rotational force 136 of the fastener 122 after it has reached the fully open position 134 will result in lifting of the entire lid 103 away from the body 102.

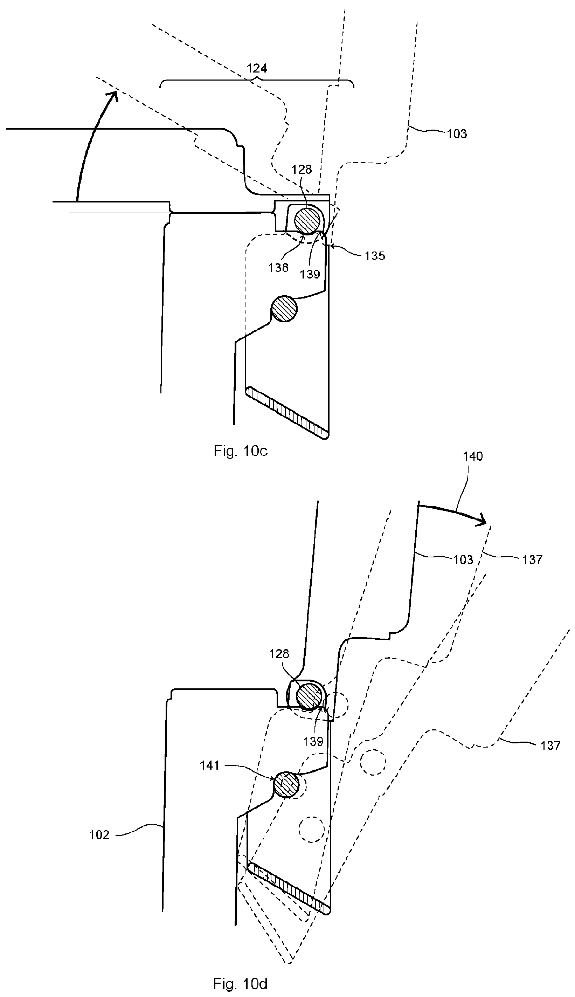

Figure 10c depicts how the fastener 122 functions when on the hinge side 124. The hinge pin 128 rests in a hinge pin resting track 138. On the side of the insulated container 101 acting as the hinge side 124, the hinge pin resting track 138 provides support for the hinge pin 128 during normal rotation of the lid 103. When the lid 103 reaches the predetermined maximum angle of rotation, as shown in Figure 10d, further rotation will be prevented by the rotational hard stop interface 135 between the fastener 122 and the stop 130.

Referring to Figure 10d, in the event of the lid 103 being subject to excessive mechanical lateral force 140 once it has reached its maximum rotation angle, the hinge pin 128 will begin to apply pressure to a hinge pin break away compression edge 139 of the mounting block 131. When this pressure is sufficiently high, it will result in temporary, elastic deformation of this compression edge 139, allowing the lid 103 and fastener 122 to over-rotate and break away from the body 102 of the insulated container 101.

In this action, a lock pin stop surface 141 engages with the lock pin 129 to cause the fastener body 127 to act as a lever arm that concentrates the rotational forces at the hinge pin on the hinge pin break away compression edge 139.

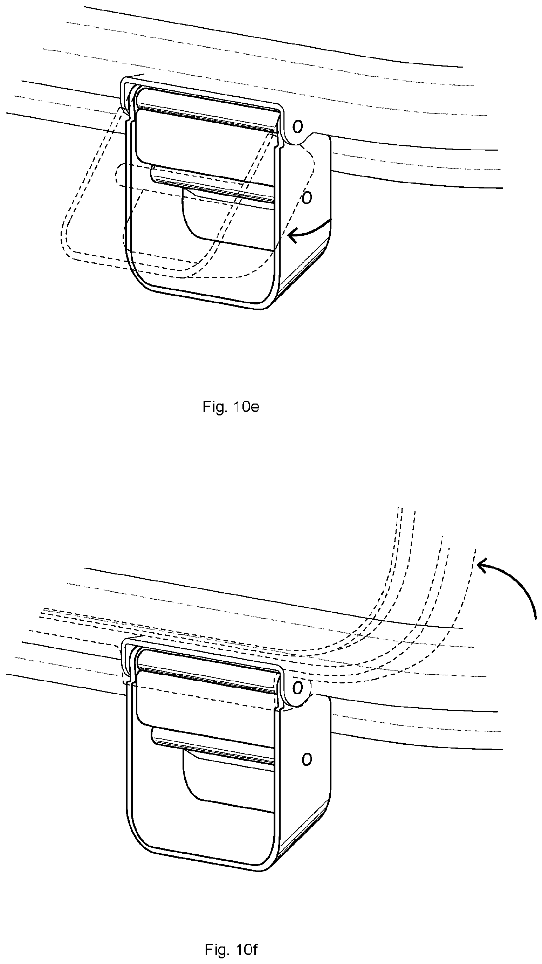

The fastener 122 is therefore capable of acting as both a latch, as shown in Figure 10e, or as a hinge as shown in Figure 10f. This advantageously allows for the insulated container 101 to be hingedly opened from either side. Furthermore, the breakaway function of the fastener 122 prevents excessive opening force being applied to the fastener 122. This is important because excessive load could damage the flanges 112 of the outer shells 106, thereby risking damage to the chamber seal 111.

Whilst not shown in the figures, the containers 1, 101 of both the first and second embodiments described above may be provided with a handle or carrying strap to facilitate lifting of the container 1, 101.

## Claims

1. A vacuum-insulated container body (2; 102), comprising:
an inner body shell (8) and an outer body shell (6; 106), wherein the inner body shell and the outer body shell are each made of a metal material;
a core (7) provided between the inner body shell and the outer body shell; and
a seal (11) connecting the inner body shell and the outer body shell,
wherein the inner body shell, the outer body shell and the seal define an intermediate space surrounding the core, the intermediate space being at a pressure below atmospheric pressure; and
**characterised in that**
the seal comprises a metallised foil and each of the inner body shell and the outer body shell comprises a flange (12; 112) bonded to the seal.

2. A vacuum-insulated container body (2; 102) according to claim 1, wherein the flanges of the inner body shell and the outer body shell both are in a common plane.

3. A vacuum-insulated container body (2; 102) according to claim 1 or 2, wherein the inner body shell (8) and the outer body shell (6; 106) each have an average thickness of less than 1.5 mm, for example having an average thickness of 1 mm.

4. A vacuum-insulated container body (2; 102) according to any preceding claim, wherein the inner body shell (8) and the outer body shell (6; 106) have each been formed by a deep drawing process.

5. A vacuum-insulated container body (2; 102) according to any preceding claim, wherein the inner body shell (8) and the outer body shell (6; 106) each comprises a base, and a wall extending from the base in a direction substantially perpendicular to the base, optionally wherein the plane of the flanges (12; 112) is substantially perpendicular to the direction in which the walls of the inner and outer body shells extend.

6. A vacuum-insulated container body (2; 102) according to any preceding claim, wherein the seal (11) is formed from a multi-layer metallised foil.

7. A vacuum-insulated container body (2; 102) according to any preceding claim, further comprising:
a gasket (14; 114) mounted to both of the flanges (12; 112) with the seal (11) between the gasket and the flanges.

8. A vacuum-insulated container body (2; 102) according to any preceding claim, in which the seal (11) is formed of flexible material.

9. A vacuum-insulated container body (2; 102) as claimed in any preceding claim in which the seal (11) is formed as a layer less than 0.3mm thick, optionally less than 0.25mm thick, 0.1 to 0.2 mm thick being an example range.

10. A vacuum-insulated container body (2; 102) as claimed in any preceding claim in which the seal (11) is formed as a multi-layer construction which includes multiple individual barriers layers, for example of metal such as aluminium, each individual barrier layer being 100 nanometres or within the range of 70 to 90 nanometres thick; optionally in which at least one polymer layer is present in the multi-layer construction.

11. A vacuum-insulated container body (2; 102) as claimed in any preceding claim, in which a shield is provided and associated with the outer body shell (6; 106) for shielding the seal (11), the shield optionally comprising a flange running around a periphery of the outer body shell (6; 106) and located at least partially outside a perimeter of the seal, optionally in which the shield runs around an outer periphery of the gasket (14; 114) to shield the gasket.

12. A vacuum-insulated container (1; 101) comprising:
a vacuum-insulated container body (2; 102) according to any preceding claim; and
a vacuum-insulated container lid (3; 103) configured to engage the container body (2; 102).

13. A vacuum-insulated container (1; 101) according to claim 12, wherein the vacuum-insulated container lid (3; 103) comprises:
an inner lid shell (8; 108) and an outer lid shell (6; 106), wherein the inner lid shell and the outer lid shell are each made of a metal material;
a core (7; 107) provided between the inner lid shell and the outer lid shell; and
a seal (11; 111) connecting the inner lid shell and the outer lid shell, wherein the inner lid shell, the outer lid shell and the seal define an intermediate space surrounding the core, the intermediate space being at a pressure below atmospheric pressure; and
wherein each of the inner lid shell and the outer lid shell comprises a flange (12; 112) bonded to the seal, the flanges of the inner lid shell and the outer lid shell both being in a common plane.

14. A vacuum-insulated container (1; 101) according to claim 12, wherein the vacuum-insulated container lid (3; 103) comprises:
an inner lid shell (8; 108) and an outer lid shell (6; 106), wherein the inner lid shell and the outer lid shell are each made of a metal material;
a core (7) provided between the inner lid shell and the outer lid shell; and
a seal (11) connecting the inner lid shell and the outer lid shell,
wherein the inner lid shell, the outer lid shell and the seal define an intermediate space surrounding the core, the intermediate space being at a pressure below atmospheric pressure; and
wherein each of the inner lid shell and the outer lid shell comprises a flange (12; 112) bonded to the seal,
the seal which connects the inner lid shell and outer lid shell being a flexible seal comprising a flexible material.

15. A vacuum-insulated container (1; 101) according to claim 13, wherein the flanges (12; 112) of the vacuum-insulated container lid (3; 103) are configured to engage the flanges (12; 112) of the vacuum-insulated container body (2; 102), this engagement optionally being indirect via respective seals (17; 117) and further optionally gaskets (14; 114) associated with the respective flanges.

## Patentansprüche

1. Vakuumisolierter Behälterkörper (2; 102), umfassend:
eine innere Körperschale (8) und eine äußere Körperschale (6; 106), wobei die innere Körperschale und die äußere Körperschale jeweils aus einem Metallmaterial gefertigt sind;
einen Kern (7), der zwischen der inneren Körperschale und der äußeren Körperschale bereitgestellt ist; und
eine Dichtung (11), die die innere Körperschale und die äußere Körperschale verbindet,
wobei die innere Körperschale, die äußere Körperschale und die Dichtung einen Zwischenraum definieren, der den Kern umgibt, wobei der Zwischenraum unter einem Druck unterhalb des Atmosphärendrucks steht; und
**dadurch gekennzeichnet, dass** die Dichtung eine metallisierte Folie umfasst und sowohl die innere Körperschale als auch die äußere Körperschale einen Flansch (12; 112) umfasst, der mit der Dichtung verbunden ist.

2. Vakuumisolierter Behälterkörper (2; 102) nach Anspruch 1, wobei die Flansche der inneren Körperschale und der äußeren Körperschale beide in einer gemeinsamen Ebene liegen.

3. Vakuumisolierter Behälterkörper (2; 102) nach Anspruch 1 oder 2, wobei die innere Körperschale (8) und die äußere Körperschale (6; 106) jeweils eine mittlere Dicke von weniger als 1,5 mm aufweisen, beispielsweise eine mittlere Dicke von 1 mm aufweisen.

4. Vakuumisolierter Behälterkörper (2; 102) nach einem der vorhergehenden Ansprüche, wobei die innere Körperschale (8) und die äußere Körperschale (6; 106) jeweils durch einen Tiefziehvorgang gebildet wurden.

5. Vakuumisolierter Behälterkörper (2; 102) nach einem der vorhergehenden Ansprüche, wobei die innere Körperschale (8) und die äußere Körperschale (6; 106) jeweils eine Basis und eine Wand umfassen, die sich von der Basis in einer Richtung im Wesentlichen senkrecht zu der Basis erstreckt, wobei optional die Ebene der Flansche (12; 112) im Wesentlichen senkrecht zu der Richtung ist, in der sich die Wände der inneren und der äußeren Körperschale erstrecken.

6. Vakuumisolierter Behälterkörper (2; 102) nach einem der vorhergehenden Ansprüche, wobei die Dichtung (11) aus einer mehrschichtigen metallisierten Folie gebildet ist.

7. Vakuumisolierter Behälterkörper (2; 102) nach einem der vorhergehenden Ansprüche, ferner Folgendes umfassend:
eine Flanschdichtung (14; 114), montiert an beiden Flanschen (12; 112) mit der Dichtung (11) zwischen der Flanschdichtung und den Flanschen.

8. Vakuumisolierter Behälterkörper (2; 102) nach einem der vorhergehenden Ansprüche, wobei die Dichtung (11) aus flexiblem Material gebildet ist.

9. Vakuumisolierter Behälterkörper (2; 102) nach einem der vorhergehenden Ansprüche, wobei die Dichtung (11) als eine Schicht gebildet ist, die weniger als 0,3 mm dick ist, optional weniger als 0,25 mm dick ist, wobei 0,1 bis 0,2 mm dick ein beispielhafter Bereich ist.

10. Vakuumisolierter Behälterkörper (2; 102) nach einem der vorhergehenden Ansprüche, wobei die Dichtung (11) als ein mehrschichtiger Aufbau ausgebildet ist, der mehrere einzelne Barriereschichten, zum Beispiel aus Metall, wie etwa Aluminium, beinhaltet, wobei jede einzelne Barriereschicht 100 Nanometer oder im Bereich von 70 bis 90 Nanometer dick ist; wobei optional mindestens eine Polymerschicht in dem mehrschichtigen Aufbau vorhanden ist.

11. Vakuumisolierter Behälterkörper (2; 102) nach einem der vorhergehenden Ansprüche, wobei eine Abschirmung bereitgestellt und mit der äußeren Körperschale (6; 106) verknüpft ist, um die Dichtung (11) abzuschirmen, wobei die Abschirmung optional einen Flansch umfasst, der um einen Umfang der äußeren Körperschale (6; 106) verläuft und sich zumindest teilweise außerhalb eines Umfangs der Dichtung befindet, wobei die Abschirmung optional um einen Außenumfang der Flanschdichtung (14; 114) verläuft, um die Flanschdichtung abzuschirmen.

12. Vakuumisolierter Behälter (1; 101), umfassend:
einen vakuumisolierten Behälterkörper (2; 102) nach einem der vorhergehenden Ansprüche; und
einen vakuumisolierten Behälterdeckel (3; 103), ausgelegt zum Ineingriffkommen mit dem Behälterkörper (2; 102).

13. Vakuumisolierter Behälter (1; 101) nach Anspruch 12, wobei der vakuumisolierte Behälterdeckel (3; 103) Folgendes umfasst:
eine innere Deckelschale (8; 108) und eine äußere Deckelschale (6; 106), wobei die innere Deckelschale und die äußere Deckelschale jeweils aus einem Metallmaterial gefertigt sind;
einen Kern (7; 107), bereitgestellt zwischen der inneren Deckelschale und der äußeren Deckelschale; und
eine Dichtung (11; 111), die die innere Deckelschale und die äußere Deckelschale verbindet, wobei die innere Deckelschale, die äußere Deckelschale und die Dichtung einen den Kern umgebenden Zwischenraum definieren, wobei der Zwischenraum unter einem Druck unterhalb des Atmosphärendrucks steht; und
wobei sowohl die innere Deckelschale als auch die äußere Deckelschale einen Flansch (12; 112) umfasst, der mit der Dichtung verbunden ist, wobei die Flansche der inneren Deckelschale und der äußeren Deckelschale beide in einer gemeinsamen Ebene liegen.

14. Vakuumisolierter Behälter (1; 101) nach Anspruch 12, wobei der vakuumisolierte Behälterdeckel (3; 103) Folgendes umfasst:
eine innere Deckelschale (8; 108) und eine äußere Deckelschale (6; 106), wobei die innere Deckelschale und die äußere Deckelschale jeweils aus einem Metallmaterial gefertigt sind;
einen Kern (7), der zwischen der inneren Deckelschale und der äußeren Deckelschale bereitgestellt ist; und
eine Dichtung (11), die die innere Deckelschale und die äußere Deckelschale verbindet,
wobei die innere Deckelschale, die äußere Deckelschale und die Dichtung einen Zwischenraum definieren, der den Kern umgibt, wobei der Zwischenraum unter einem Druck unterhalb des Atmosphärendrucks steht; und
wobei sowohl die innere Deckelschale als auch die äußere Deckelschale einen Flansch (12; 112), der mit der Dichtung verbunden ist, umfasst,
wobei die Dichtung, die die innere Deckelschale und die äußere Deckelschale verbindet, eine flexible Dichtung aus einem flexiblen Material ist.

15. Vakuumisolierter Behälter (1; 101) nach Anspruch 13, wobei die Flansche (12; 112) des vakuumisolierten Behälterdeckels (3; 103) ausgelegt sind zum Ineingriffkommen mit den Flanschen (12; 112) des vakuumisolierten Behälterkörpers (2; 102), wobei dieser Eingriff gegebenenfalls indirekt über jeweilige Dichtungen (17; 117) und ferner optional Flanschdichtungen (14; 114), die mit den jeweiligen Flanschen assoziiert sind, erfolgt.

## Revendications

1. Corps de contenant isotherme à vide (2 ; 102), comprenant :
une coque de corps interne (8) et une coque de corps externe (6 ; 106), la coque de corps interne et la coque de corps externe étant chacune réalisées en matériau métallique ;
un noyau (7) placé entre la coque de corps interne et la coque de corps externe ; et
un joint (11) reliant la coque de corps interne et la coque de corps externe,
la coque de corps interne, la coque de corps externe et le joint définissant un espace intermédiaire entourant le noyau, l'espace intermédiaire étant à une pression inférieure à la pression atmosphérique ; et
**caractérisé en ce que** le joint comprend une feuille métallisée et chacune de la coque de corps interne et de la coque de corps externe comprend une bride (12 ; 112) collée sur le joint.

2. Corps de contenant isotherme à vide (2 ; 102) selon la revendication 1, les brides de la coque de corps interne et de la coque de corps externe étant toutes deux dans un plan commun.

3. Corps de contenant isotherme à vide (2 ; 102) selon la revendication 1 ou 2, la coque de corps interne (8) et la coque de corps externe (6 ; 106) présentant chacune une épaisseur moyenne inférieure à 1,5 mm, par exemple présentant une épaisseur moyenne de 1 mm.

4. Corps de contenant isotherme à vide (2 ; 102) selon l'une quelconque des revendications précédentes, la coque de corps interne (8) et la coque de corps externe (6 ; 106) ayant été formées chacune par un procédé d'emboutissage profond.

5. Corps de contenant isotherme à vide (2 ; 102) selon l'une quelconque des revendications précédentes, la coque de corps interne (8) et la coque de corps externe (6 ; 106) comprenant chacune une base, et une paroi s'étendant depuis la base dans une direction sensiblement perpendiculaire à la base, éventuellement le plan des brides (12 ; 112) étant sensiblement perpendiculaire à la direction dans laquelle les parois des coques de corps interne et externe s'étendent.

6. Corps de contenant isotherme à vide (2 ; 102) selon l'une quelconque des revendications précédentes, le joint (11) étant formé à partir d'une feuille métallisée multicouche.

7. Corps de contenant isotherme à vide (2 ; 102) selon l'une quelconque des revendications précédentes, comprenant en outre :
un joint d'étanchéité (14 ; 114) monté sur les deux brides (12 ; 112) avec le joint (11) entre le joint d'étanchéité et les brides.

8. Corps de contenant isotherme à vide (2 ; 102) selon l'une quelconque des revendications précédentes, le joint (11) étant formé en matériau souple.

9. Corps de contenant isotherme à vide (2 ; 102) selon l'une quelconque des revendications précédentes, le joint (11) étant formé comme une couche de moins de 0,3 mm d'épaisseur, éventuellement de moins de 0,25 mm d'épaisseur, une épaisseur de 0,1 à 0,2 mm étant une plage exemple.

10. Corps de contenant isotherme à vide (2 ; 102) selon l'une quelconque des revendications précédentes, le joint (11) étant formé comme une construction multicouche qui comprend plusieurs couches barrières individuelles, par exemple en métal tel que l'aluminium, chaque couche barrière individuelle présentant une épaisseur de 100 nanomètres ou une épaisseur dans la plage comprise entre 70 et 90 nanomètres ; éventuellement au moins une couche polymère étant présente dans la construction multicouche.

11. Corps de contenant isotherme à vide (2 ; 102) selon l'une quelconque des revendications précédentes, un écran étant fourni et associé à la coque de corps externe (6 ; 106) pour protéger le joint (11), l'écran comprenant éventuellement une bride s'étendant sur un pourtour de la coque de corps externe (6 ; 106) et située au moins partiellement à l'extérieur d'un pourtour du joint, éventuellement l'écran s'étendant sur le pourtour externe du joint d'étanchéité (14 ; 114) pour protéger le joint d'étanchéité.

12. Contenant isotherme à vide (1 ; 101) comprenant :
un corps de contenant isotherme à vide (2 ; 102) selon l'une quelconque des revendications précédentes ; et
un couvercle de contenant isotherme à vide (3 ; 103) conçu pour venir en prise avec le corps de contenant (2 ; 102) .

13. Contenant isotherme à vide (1 ; 101) selon la revendication 12, le couvercle de contenant isotherme à vide (3 ; 103) comprenant :
une coque de couvercle interne (8 ; 108) et une coque de couvercle externe (6 ; 106), la coque de couvercle interne et la coque de couvercle externe étant chacune en un matériau métallique ;
un noyau (7 ; 107) placé entre la coque de couvercle interne et la coque de couvercle externe ; et
un joint (11 ; 111) reliant la coque de couvercle interne et la coque de couvercle externe, la coque de couvercle interne, la coque de couvercle externe et le joint définissant un espace intermédiaire entourant le noyau, l'espace intermédiaire étant à une pression inférieure à la pression atmosphérique ; et
chacune de la coque de couvercle interne et de la coque de couvercle externe comprenant une bride (12 ; 112) collée sur le joint, les brides de la coque de couvercle interne et de la coque de couvercle externe étant toutes deux dans un plan commun.

14. Contenant isotherme à vide (1 ; 101) selon la revendication 12, le couvercle de contenant isotherme à vide (3 ; 103) comprenant :
une coque de couvercle interne (8 ; 108) et une coque de couvercle externe (6 ; 106), la coque de couvercle interne et la coque de couvercle externe étant chacune en un matériau métallique ;
un noyau (7) placé entre la coque de couvercle interne et la coque de couvercle externe ; et
un joint (11) reliant la coque de couvercle interne et la coque de couvercle externe,
la coque de corps interne, la coque de corps externe et le joint définissant un espace intermédiaire entourant le noyau, l'espace intermédiaire étant à une pression inférieure à la pression atmosphérique ; et
chacune de la coque de couvercle interne et de la coque de couvercle externe comprenant une bride (12 ; 112) collée au joint,
le joint qui relie la coque de couvercle interne et la coque de couvercle externe étant un joint souple comprenant un matériau souple.

15. Contenant isotherme à vide (1 ; 101) selon la revendication 13, les brides (12 ; 112) du couvercle de contenant isotherme à vide (3 ; 103) étant conçues pour venir en prise avec les brides (12 ; 112) du corps de contenant isotherme à vide (2 ; 102), cette mise en prise étant éventuellement indirecte par l'intermédiaire de joints (17 ; 117) respectifs et éventuellement encore de joints d'étanchéité (14 ; 114) associés aux brides respectives.
